# EUROPÄISCHE PATENTSCHRIFT

(11) **EP 3 034 851 B1**
(45) Veröffentlichungstag und Bekanntmachung des Hinweises auf die Patenterteilung: **05.06.2019**
(21) Anmeldenummer: 14004212.8
(22) Anmeldetag: 15.12.2014
(51) Int. Cl.: F02M 21/02, F02M 37/00, F02B 19/10, F02B 43/04

(54) **Brennkraftmaschine**
Combustion engine
Moteur à combustion interne

(43) Veröffentlichungstag der Anmeldung: 22.06.2016
(73) Patentinhaber: Innio Jenbacher GmbH & Co OG, 6200 Jenbach (AT)
(72) Erfinder: Wimmer, Andreas, 8010 Graz (AT); Christiner, Peter, 8055 Graz (AT); Schubert-Zallinger, Claudia, 8020 Graz (AT); Grotz, Matthias, 6020 Innsbruck (AT)
(74) Vertreter: Torggler & Hofinger Patentanwälte

(56) Entgegenhaltungen:
- EP-A1- 0 780 569
- EP-A1- 2 330 284
- EP-A1- 2 518 299
- EP-A1- 2 787 192
- JP-A- 2000 320 369
- JP-A- 2009 221 935
- US-B1- 7 383 861

## Beschreibung

Die Erfindung betrifft eine Brennkraftmaschine, insbesondere einen Gas-Otto-Motor, mit den Merkmalen des Oberbegriffs von Anspruch 1.

Brennkraftmaschinen mit Vorkammern sind aus dem Stand der Technik bekannt. In Brennkraftmaschinen ab einem bestimmten Hubraumvolumen reicht die Energie eines Zündfunkens einer Zündkerze allein nicht mehr aus, um das - aus Gründen der Emissionen - häufig sehr magere Brenngas-Luft-Gemisch im Hauptbrennraum sicher zu entzünden. Bei Vorkammermotoren ist also ein weiterer Brennraum vorgesehen, der nur einen Bruchteil des Volumens des Hauptbrennraums aufweist, und in welchem ein Brenngas-Luft-Gemisch durch eine Zündeinrichtung entzündet wird. Diese Vorkammer ist mit dem Hauptbrennraum über einen Kanal verbunden. Durch die Überströmbohrungen am hauptbrennraumseitigen Ende des Kanals schlagen die Zündfackeln in den Hauptbrennraum über und entzünden das dort vorliegende Gemisch.

Bei einer sogenannten ungespülten Vorkammer wird während des Kompressionstaktes Gemisch aus dem Hauptbrennraum in die Vorkammer gedrückt, es liegt also im Hauptbrennraum und der Vorkammer das gleiche Gas-Luftgemisch vor.
Wird die Vorkammer hingegen zusätzlich mit Brenngas oder Gemisch versorgt, spricht man von einer gespülten Vorkammer. Bei gespülten Vorkammern wird also zur Erhöhung der Zündenergie der Vorkammer das Gemisch in der Vorkammer mit einer kleinen Menge an Brenngas oder eines zusätzlichen Brennstoffes angereichert.

In der EP0377265 ist beispielsweise ein Gasmotor beschrieben, der eine Vorkammer aufweist, die mit einer Gasleitung 18 mit Brenngas versorgt wird. Rückschlagventil 24 öffnet wenn der erforderliche Öffnungsdifferenzdruck erreicht wird und gibt Brenngas an die Vorkammer frei.

Eine gattungsgemäße Brennkraftmaschine weist eine Vorkammer auf, welche von einer Vorkammergasversorgungsstrecke mit Brenngas versorgbar ist.
Die Dosierung von Brenngas aus der Vorkammergasversorgungsstrecke in die Vorkammer erfolgt durch ein Vorkammergasventil. Die Vorkammergasversorgungsstrecke selbst wird von der Gasversorgung der Brennkraftmaschine mit Gas gespeist. Die Gaszufuhr erfolgt zur Einstellung der gewünschten Vorkammergasmenge meist über eine zentrale Blende zwischen der Hauptgasversorgung und der Vorkammergasversorgungsstrecke.

Das Vorkammergasventil ist meist als passives Rückschlagventil ausgeführt, das nur bei einer bestimmten positiven Differenz zwischen dem Druck der Gasversorgung und dem in der Vorkammer anliegenden Druck öffnet und so der Vorkammer eine bestimmte Menge an Gas zumisst. Wenn der Öffnungsdifferenzdruck unterschritten wird, bleibt das Vorkammergasventil geschlossen.

Da die Vorkammergasversorgung häufig mit dem Verdichter der Brennkraftmaschine gekoppelt ist, entspricht der Druck in der Vorkammergasversorgung meist dem Ladedruck oder ist mit diesem gekoppelt.

Betrachtet man die Verdichtungskurve des Hauptbrennraums, so erfolgt die Öffnung des Vorkammergasventils während des Ladungswechsels, bei Überschreiten des Öffnungsdifferenzdruckes des Vorkammergasventils.

Durch die abrupte Öffnung der Vorkammergasventile beim Erreichen einer ausreichend großen Druckdifferenz zwischen dem Druck in der Vorkammergasversorgungsleitung und dem Hauptbrennraum werden auf das in der Vorkammergasleitung vorliegende Gasvolumen Druckschwingungen aufgeprägt. Durch diese Druckschwingungen können die gewünschten Öffnungszeiten der Vorkammergasventile sowie die zugeführte Gasmenge, auch von anderen Zylindern, beeinflusst werden.

Die Druckschwankungen in der Vorkammergasversorgungsleitung nämlich bewirken, dass lokal vor einem Vorkammergasventil ein anderer Druck als der Nenndruck der Vorkammergasversorgung anliegt und daher jenes Druckverhältnis zwischen Vorkammergasversorgungsleitung und Hauptbrennraum, welches die Öffnung des Vorkammergasventils bewirkt, für zu kurze Zeit, zu lange oder gar nicht erreicht wird.

Die Konsequenz ist, dass den Vorkammern eine undefinierte Menge an Brenngas und dies zu unbestimmten Zeiten zugeführt wird.

Abweichungen von der vorgegebenen Menge an der Vorkammer zugeführtem Brenngas haben negative Auswirkungen auf die Emissionen, den Wirkungsgrad und die Verbrennungsstabilität der Brennkraftmaschine. Bei zu geringer Brennstoffzufuhr in die Vorkammer besteht beispielsweise die Gefahr, dass die Vorkammer den Hauptbrennraum nicht sicher entzünden kann.

Um also die Druckschwingungen, die der Gassäule der Vorkammergasversorgung aufgeprägt werden, abzumildern, sind üblicherweise in jenem Leitungsabschnitt, der die Vorkammergasversorgungsleitung mit den einzelnen Vorkammergasventilen verbindet, Blenden (also zusätzliche "dezentrale" Blenden zu der "zentralen" Blende zwischen Hauptgasversorgung und Vorkammergasstrecke) vorgesehen, durch welche das Gas nur gedrosselt strömen kann.

Diese an sich aus dem Stand der Technik bekannten lokalen Blenden bewirken, dass sich das Volumen zwischen Blende und Vorkammergasventil verlangsamt füllt. Durch dieses langsame "Aufladen" werden Schwingungen in der Vorkammergasversorgungsleitung ("Rail") reduziert. Auch wird erreicht, dass die schlagartige Öffnung des Vorkammergasventils keine oder nur stark gedämpfte Druckschwingungen auf die Vorkammergasversorgung übertragen kann.
Damit soll erreicht werden, dass allen Vorkammern, die jeweils einem Brennraum der Brennkraftmaschine zugeordnet sind, stets die gleiche Menge an Brenngas zugeführt wird.

Es ist allerdings bekannt, dass zwischen den Zylindern einer mehrere Brennkammern umfassenden Brennkraftmaschine Abweichungen im Zylinderdruckverlauf während des Ladungswechsels und der Hochdruckphase bestehen. Diese sogenannte Zylinderungleichstellung ist bereits deshalb unvermeidlich, da geometrische Abweichungen zwischen den Kolben-Zylinder-Einheiten und Strömungseffekte im Ladungswechsel bestehen. Nachteilig dabei ist, dass ein niedriger Druck in der Vorkammer während des Ladungswechsels zu einer größeren zugeführten Vorkammergasmenge führt und umgekehrt.

Auch führen Unterschiede in den Vorkammergasventilen und in den zylinderindividuellen Teilen der Vorkammergasversorgung zu weiteren Beiträgen zur Ungleichstellung.

Eine Brennkraftmaschine mit den Merkmalen des Oberbegriffs des Anspruchs 1 geht aus EP 2 787 192 A1 hervor.

Aufgabe der vorliegenden Erfindung ist es, eine Vorrichtung zur Zumessung an Vorkammergas bzw. ein Verfahren zur Herstellung derselben anzugeben, durch welche eine Gleichstellung der Zylinder hinsichtlich der Zumessung an Vorkammergas gewährleistbar ist.

Gelöst wird diese Aufgabe durch eine Brennkraftmaschine nach Anspruch 1. Vorteilhafte Ausführungsformen sind in dem abhängigen Anspruch angegeben.

Unter Brenngas wird im Kontext der vorliegenden Anmeldung reines Gas (gemeint ist ein brennbares Gas, z.B. Erdgas) oder ein Gas-Luft-Gemisch verstanden.

Erfindungsgemäß ist vorgesehen, dass wenigstens eine, vorzugsweise sämtliche der einem Vorkammergasventil zugeordneten Blenden einen derart kleinen Durchflusskoeffizienten aufweist bzw. aufweisen, dass der zwischen den Verbrennungszyklen sich maximal einstellende Druck im Volumen zwischen Vorkammergasventil und der Blende nicht den in der Vorkammergasversorgungsleitung herrschenden Druck erreicht, sondern beim Öffnen des Vorkammergasventils sich dieser Druck noch in aufsteigender Tendenz befinden, sodass zu diesem Zeitpunkt noch Gas aus der Vorkammergasversorgungsleitung durch die Blende in das Volumen zwischen der Blende und dem Vorkammergasventil strömt. Der Durchflusskoeffizient ist Maß für den erzielbaren Durchsatz an Fluid durch eine Öffnung, in diesem Fall die Blende, und ist als effektiver Querschnitt interpretierbar.
Je kleiner der geometrischer Strömungsquerschnitt ist, desto kleiner ist auch der Durchflusskoeffizient. Zusätzliche Einflussgröße auf den Durchflusskoeffizienten ist die Gestaltung der Blendengeometrie.

Der derart kleine Durchflusskoeffizient bewirkt, dass Unterschiede in der den verschiedenen Kolben-Zylindereinheiten zugeführten Vorkammergasmenge verringert werden, und zwar umso mehr, je kleiner der Durchflusskoeffizient gewählt wird.

Die Anmelderin hat nämlich in Versuchen festgestellt, dass bei Wahl eines unüblich kleinen Durchflusskoeffizienten der Blenden, welche in den Leitungsabschnitt zwischen der Vorkammergasversorgungsleitung und dem Vorkammergasventil angeordnet sind, erreicht wird, dass in dem Volumen zwischen der Blende und dem Vorkammergasventil während eines Verbrennungszyklus nicht das Druckniveau der Vorkammergasversorgungsleitung erreicht wird.
Vielmehr stellt sich im Volumen zwischen der Blende und dem Vorkammergasventil ein maximaler Druck ein, der in einem Verhältnis zu der zugeführten Vorkammergasmenge steht. Die Vorkammergasmenge ist zum einen abhängig von dem Zylinderdruck der dieser Vorkammer zugeordneten Kolben-Zylindereinheit während der Öffnungsphase des Vorkammergasventils. Des Weiteren ist die Vorkammergasmenge auch abhängig von der Durchflusscharakteristik der zylinderindividuellen Vorkammergasversorgungsleitung bis hin zur Vorkammer und der Durchflusscharakteristik des Vorkammergasventils.

In anderen Worten wird also erreicht, dass das Druckniveau in jenem Volumensabschnitt, welches für die tatsächliche Zumessung an Gas, welches der Vorkammer zur Verfügung gestellt wird, nämlich jenes Volumen zwischen der Blende und dem Vorkammergasventil, von dem in der Vorkammergasversorgungsleitung herrschenden Druckniveau teilweise entkoppelt wird. Eine Gleichstellung der über die Ventile wirkenden Differenzdrücke wird erzielt.

Die Abweichungen bzw. Unterschiede in den zylinderindividuellen Vorkammergasversorgungsleitungen bis hin zur Vorkammer, sowie Abweichungen bzw. Unterschiede in der Durchflusscharakteristik der Vorkammergasventile führen neben den Druckunterschieden in den Kolben-Zylindereinheiten ebenfalls zu einer Schiefstellung der Vorkammergasversorgung und werden von der erfindungsgemäßen Einrichtung gemildert.

Es stellt sich also ein Zustand ein, bei welchem die Vorkammern hinsichtlich der Vorkammergasmenge im Wesentlichen gleichgestellt sind. Durch die Erfindung wird unter Beibehaltung eines eigentlich rein passiv wirkenden Vorkammergasventils ein sich selbst regulierendes System zur Zylindergleichstellung geschaffen. Das System kann sich zylinderindividuellen Änderungen im Motorbetrieb oder der Motorausrüstung anpassen.

Dabei genügen schon minimale Unterschreitungen des Raildrucks. Ein nennenswerter Effekt hinsichtlich der Gleichstellung tritt bereits ein, wenn der zwischen den Verbrennungszyklen sich maximal einstellende Druck im Volumen zwischen Vorkammergasventil und Blende unter 99% des Druckes in der Vorkammergasversorgungsleitung bleibt. Bevorzugt wird der Blendendurchmesser bzw. der Durchflusskoeffizient der Blende so gewählt, dass der Druck unter 95% des Druckes in der Vorkammergasversorgungsleitung bleibt. Besonders bevorzugt wird der Blendendurchmesser bzw. der Durchflusskoeffizient der Blende so gewählt, dass der Druck unter 85% des Druckes in der Vorkammergasversorgungsleitung bleibt.

In einer Weiterbildung der Erfindung ist vorgesehen, dass wenigstens zwei Blenden einen voneinander verschiedenen Durchflusskoeffizienten aufweisen. D.h. es können den Vorkammern der einzelnen Kolben-Zylindereinheiten jeweils unterschiedliche Blenden zugeordnet sein. Damit wird erreicht, dass bei bekanntem Vorliegen einer Zylinderungleichstellung, d.h. Unterschieden in der Brennraum-Druckentwicklung der Kolben-Zylindereinheiten, dies über eine individuelle Wahl der Blende berücksichtigt werden kann.

Die Erfindung wird im Folgenden durch die Figurenbeschreibung näher erläutert. Dabei zeigen:
- Fig. 1: Schema einer Brennkraftmaschine mit Vorkammergasversorgung
- Fig. 2: Diagramm mit Druckverläufen vor Vorkammergasventil nach Stand der Technik
- Fig. 3: Diagramm mit Druckverläufen vor Vorkammergasventil (gemäß der Erfindung)

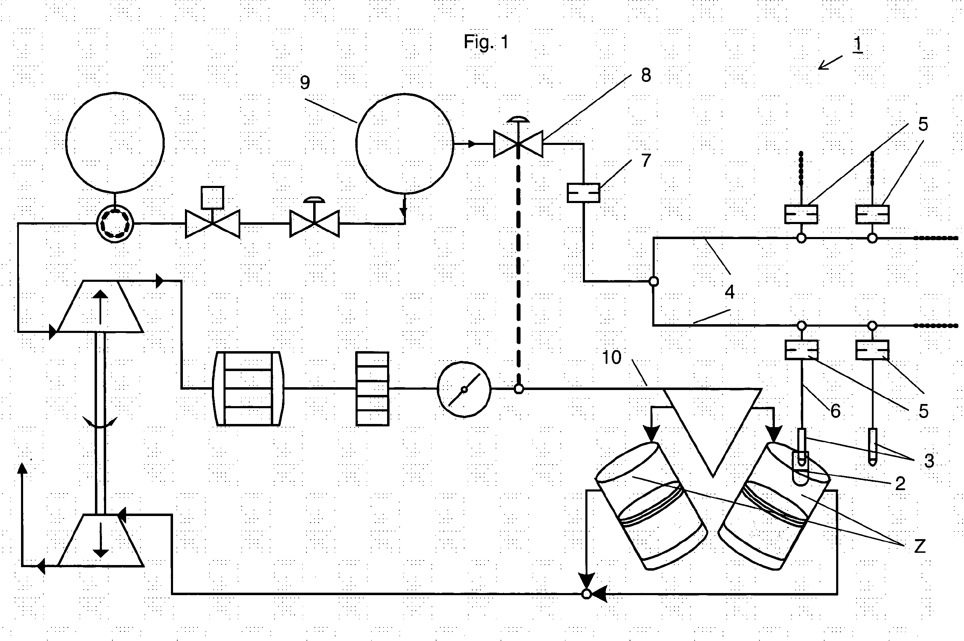

Figur 1 zeigt in einer schematischen Ansicht eine Brennkraftmaschine 1 mit mehreren Zylindern Z. Der Übersichtlichkeit halber sind nur zwei Zylinder Z dargestellt. Die Brennräume der Zylinder Z erhalten über die Ansaugleitung 10 brennfähiges Gemisch. Nicht dargestellt, aber ebenso vorstellbar ist eine Konfiguration, in welcher den Brennräumen verdichtete Luft über die Ansaugleitung 10 und Brenngas separat über eigene Ventile, etwa Port-Injection-Ventile, zugeführt wird.

Die Entflammung der Brennräume in den Zylindern Z geschieht durch Vorkammern 2 (der Übersichtlichkeit halber ist lediglich eine Vorkammer 2 gezeigt), aus welchen Zündfackeln in den Brennraum der Zylinder Z übertreten, wie es für sich aus dem Stand der Technik bekannt ist. Dazu ist in den Vorkammern 2 eine Zündeinrichtung angeordnet (nicht gezeigt).
Den einzelnen Vorkammern und damit den einzelnen Zylindern Z ist jeweils ein Vorkammergasventil 3 zugeordnet, über welches Brenngas aus der Vorkammergasversorgungsleitung 4 den Vorkammern zuführbar ist. Der Übersichtlichkeit halber ist die Zuordnung der Vorkammer 2 bzw. des Vorkammergasventils 3 nur an einem Zylinder Z gezeigt.

Die Vorkammergasventile 3 sind meist als passive Rückschlagventile ausgeführt, die bei einer bestimmten positiven Differenz zwischen dem Druck in der Leitung 6 und dem in der Vorkammer 2 anliegenden Druck öffnen und so der Vorkammer 2 eine bestimmte Menge an Gas zumessen. Wenn der Öffnungsdifferenzdruck unterschritten wird, bleibt das Vorkammergasventil geschlossen. Der Druck in den Vorkammern entspricht in etwa dem Brennraumdruck der zugeordneten Zylinder Z.

Die Vorkammergasversorgungsleitung 4 wird von einer Hauptgasversorgung 9 über ein Druckregelventil 8 und eine zentrale Blende 7 gespeist. Das Druckregelventil 8 regelt den Druck in der Vorkammergasversorgungsleitung 4 auf ein konstantes Verhältnis zum Ladedruck der Brennkraftmaschine. Neben der Einstellung des Vorkammergas-Volumenstroms bewirkt die zentrale Blende 7, dass keine Druckpulsationen von der Hauptgasversorgung 9 auf die Vorkammergasversorgungsleitung 4 übertragen werden.

Der Vorkammergasversorgungsleitung 4 sind dezentrale Blenden 5 zugeordnet, wobei jeweils eine dezentrale Blende 5 in jenem Leitungsabschnitt 6 der Vorkammergasversorgung angeordnet ist, der von der Vorkammergasversorgungsleitung 4 zu den einzelnen Vorkammern 2 der Brennkraftmaschine 1 führt. Das heißt, jedem Vorkammerventil 3 ist eine dezentrale Blende 5 zugeordnet.

Bei Öffnen der Vorkammergasventile 3 strömt Brenngas aus dem Leitungsabschnitt 6 in die Vorkammer. Durch die dezentrale Blende 5 verzögert strömt Brenngas aus der Vorkammergasversorgungsleitung 4 in den Leitungsabschnitt 6 nach. Die dezentralen Blenden 5 sind im Stand der Technik so dimensioniert, dass sie Druckschwingungen drosseln und dass vor dem Öffnen des Vorkammergasventils 3 im Leitungsabschnitt 6 der Druck der Vorkammergasversorgungsleitung 4 herrscht.
In der erfindungsgemäßen Ausbildung der dezentralen Blenden 5 wird während eines Arbeitsspiels der Brennkraftmaschine 1 im Leitungsabschnitt 6 nicht der in der Vorkammergasversorgungsleitung 4 vorherrschende Druck erreicht.

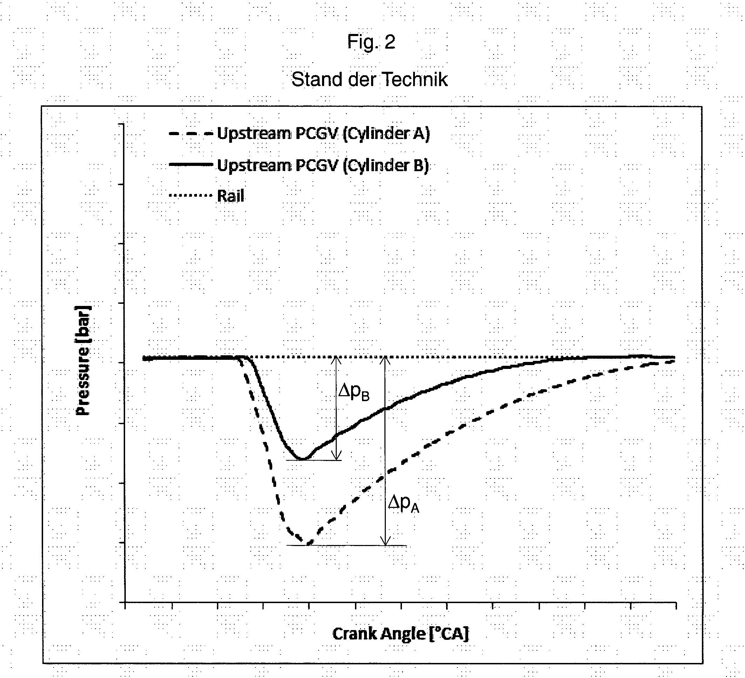

Figur 2 zeigt verschiedene Verläufe des Druckes in dem Volumen zwischen der dezentralen Blende 5 und dem Vorkammergasventil 3 während eines Arbeitszyklus (entsprechend 720° bei einem 4-Taktmotor) für eine dezentrale Blende 5 mit einem Durchmesser bzw. Durchflusskoeffizienten nach dem Stand der Technik.
Gezeigt sind die Druckverläufe für Zylinder A und Zylinder B einer Brennkraftmaschine 1. Auf der Ordinate ist der Druck im Volumen zwischen dem Vorkammergasventil 3 und der Blende 5 aufgetragen, auf der Abszisse der Kurbelwinkel.

Es wurden zwei deutlich verschiedene Zylinder gewählt, um die unbeabsichtigten Unterschiede in der Zumessung am Vorkammergas für diese zwei Zylinder zu demonstrieren. Der Druckverlauf für Zylinder A ist strichliert gezeichnet, für Zylinder B durchgezogen gezeichnet, der Druck in der Vorkammergasversorgungsleitung 4 ("Raildruck") ist punktiert gezeichnet.

Der Ausgangsdruck entspricht für beide Zylinder A und B dem Druck in der Vorkammergasversorgungsleitung 4. Das Vorkammergasventil 3 öffnet bei Erreichen einer bestimmten positiven Druckdifferenz zwischen Druck in der Vorkammergasversorgungsleitung 4 und Druck in der Vorkammer 2.

Man erkennt, dass der Druckabfall Δp_{A} für den Zylinder A viel stärker ausgeprägt ist als für der Druckabfall Δp_{B} für den Zylinder B. Unter der vereinfachten Annahme, dass der Unterschied zwischen minimalem und maximalem Druck im Volumen 6 proportional zur Menge an überströmendem Gas ist, ist leicht zu erkennen, dass der Zylinder A wesentlich mehr Vorkammergas erhält als der Zylinder B.

Anders ausgedrückt, kann der Zylinder A in der Öffnungsphase des Vorkammergasventils 3 wegen des niedrigeren Drucks im Zylinder mehr Gas aus der Vorkammergasversorgungsleitung 4 saugen als der Zylinder B.
Nach dem Schließen der Ventile erreichen die Drücke in den Volumina 6 für beide Zylinder A und B wieder den Ausgangsdruck, also den Druck in der Vorkammergasversorgungsleitung 4. Wird der Druck in der Vorkammergasversorgungsleitung 4 als 100% festgelegt, erreichen also die Drücke in den Volumina 6 innerhalb eines Verbrennungszyklus diese 100%.

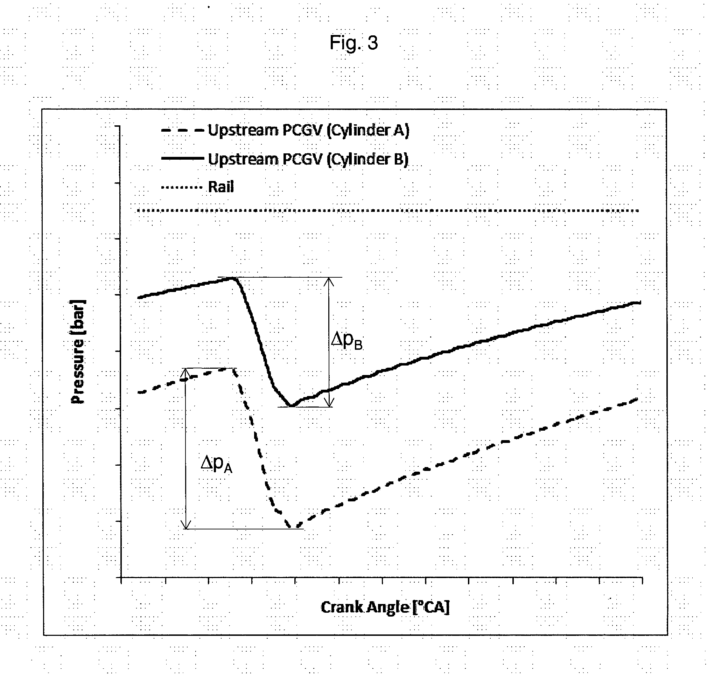

Anhand Figur 3 werden nun die für Figur 2 erklärten Druckverläufe für ein Ausführungsbeispiel diskutiert, in welchem der Durchflusskoeffizient der dezentralen Blende 5 auf ein unübliches Maß verringert wurde.

Die erste augenscheinliche Veränderung betrifft die unterschiedlichen Druckniveaus vor Öffnen des Ventils. Man erkennt, dass Zylinder B, wieder durchgezogen gezeichnet, bei einem höheren Druckniveau startet, als der Zylinder A, strichliert gezeichnet.

Beide Zylinder A und B erreichen nicht das Druckniveau der Vorkammergasversorgungsleitung 4 ("Rail", punktiert gezeichnet). Wird der Druck in der Vorkammergasversorgungsleitung 4 wieder mit 100% festgelegt, so erreichen die Drücke in den Volumina 6 innerhalb eines Zyklus nicht die 100%.

Gut zu erkennen ist, dass die Druckhübe, Δp_{A} für den Zylinder A und Δp_{B} für den Zylinder B, das ist die maximale Differenz zwischen dem Ausgangswert und dem tiefsten erreichten Wert, beider Zylinder angeglichen wurde. Die Kurven Zylinder A und Zylinder B verlaufen nun parallel.

Damit ist eine annähernde Gleichstellung der Zylinder A und B hinsichtlich des zugeführten Vorkammergases erreicht. Sie erhalten also nahezu die gleiche Menge an Vorkammergas.

Auch zu erkennen ist, dass die Drücke nicht das Druckniveau der Vorkammergasversorgung erreichen, sondern bei Öffnen der Vorkammergasventile sich noch in aufsteigender Tendenz befinden, d.h. es strömt zu diesem Zeitpunkt noch Gas aus der Vorkammergasversorgungsleitung 4 durch die dezentrale Blende 5 in das Volumen 6 zwischen dezentraler Blende 5 und Vorkammergasventil 3.

Ob eine dezentrale Blende 5 erfindungsgemäß ausgeführt ist, kann durch Messung des Druckes in dem Volumen 6 zwischen der dezentralen Blende 5 vor dem Vorkammergasventil 3 und des Druckes in der Vorkammergasversorgungsleitung 4 sehr einfach überprüft werden. Die Instrumentierung mit Drucksensoren geschieht wie es dem Fachmann geläufig ist. Wird zwischen den Verbrennungszyklen im Volumen 6 nicht der in der Vorkammergasversorgungsleitung 4 herrschende Raildruck erreicht (gemeint ist der sich maximal einstellende Druck im Volumen 6), so sind dezentrale Blenden 5 erfindungsgemäß ausgeführt und es wird die beschriebene Gleichstellung der Zylinder hinsichtlich der Vorkammergasmenge erreicht.

### Liste der verwendeten Bezugszeichen:

- 1: Brennkraftmaschine
- 2: Vorkammer
- 3: Vorkammergasventil
- 4: Vorkammergasversorgungsleitung
- 5: Dezentrale Blende
- 6: Volumen zwischen Vorkammergasventil 3 und Blende 5
- 7: Zentrale Blende
- 8: Druckregelventil
- 9: Hauptgasversorgungsleitung
- 10: Ansaugleitung
- Z: Zylinder
- Δpᵢ: Druckabfall, Druckhub

## Patentansprüche

1. Brennkraftmaschine (1), insbesondere Gas-Otto-Motor, mit
- einer Vielzahl von Zylindern (Z), wobei den Zylindern (Z) jeweils eine Vorkammer (2) zugeordnet ist,
- einer Vorkammergasversorgungsleitung (4) durch welche die Vorkammern (2) über ein der jeweiligen Vorkammer (2) zugeordnetes, passives Vorkammergasventil (3) mit Brenngas versorgbar sind,
- wobei zwischen der Vorkammergasversorgungsleitung (4) und dem Vorkammergasventil (3) jeweils eine Blende (5) eingerichtet ist,
**dadurch gekennzeichnet, dass** wenigstens eine Blende (5), vorzugsweise sämtliche der einem Vorkammergasventil (3) zugeordneten Blenden (5), einen derart kleinen Durchflusskoeffizienten aufweist, dass der zwischen den Verbrennungszyklen sich maximal einstellende Druck im Volumen (6) zwischen Vorkammergasventil (3) und der Blende (5) nicht den in der Vorkammergasversorgungsleitung (4) herrschenden Druck erreicht, sondern beim Öffnen des Vorkammergasventils (3) sich dieser Druck noch in aufsteigender Tendenz befindet, sodass zu diesem Zeitpunkt noch Gas aus der Vorkammergasversorgungsleitung (4) durch die Blende (5) in das Volumen (6) zwischen der Blende (5) und dem Vorkammergasventil (3) strömt.

2. Brennkraftmaschine (1) nach Anspruch 1, **dadurch gekennzeichnet, dass** wenigstens zwei Blenden (5) einen voneinander verschiedenen Durchflusskoeffizieten aufweisen.

## Claims

1. An internal combustion engine (1), in particular a gas Otto-cycle engine, comprising
- a plurality of cylinders (Z), wherein each cylinder (Z) is provided with a respective pre-chamber (2),
- a pre-chamber gas supply conduit (4) through which the pre-chambers (2) can be supplied with fuel gas by way of a passive pre-chamber gas valve (3) associated with the respective pre-chamber (2),
- wherein a respective aperture (5) is arranged between the pre-chamber gas supply conduit (4) and the pre-chamber gas valve (3),
**characterised in that** at least one aperture (5), preferably all of the apertures (5), associated with a pre-chamber gas valve (3) has such a small through-flow coefficient that the pressure which occurs at a maximum between the combustion cycles in the volume (6) between the pre-chamber gas valve (3) and the aperture (5) does not reach the pressure prevailing in the pre-chamber gas supply conduit (4), but, upon opening of the pre-chamber gas valve (3), are still in a rising trend, so that **in that** moment in time gas is still flowing out of the pre-chamber gas supply conduit (4) through the aperture (5) into the volume (6) between the decentral aperture (5) and the pre-chamber gas valve (3).

2. An internal combustion engine (1) as set forth in claim 1 **characterised in that** at least two apertures (5) have a mutually different through-flow coefficient.

## Revendications

1. Moteur à combustion interne (1), en particulier moteur à gaz à allumage commandé, avec
- une multiplicité de cylindres (Z), une préchambre (2) étant respectivement affectée aux cylindres (Z),
- une conduite d'alimentation en gaz de préchambre (4) à travers laquelle les préchambres (2) peuvent être alimentées en gaz combustible par le biais d'une soupape à gaz de préchambre (3) passive affectée à la préchambre (2) respective,
- respectivement un obturateur (5) étant disposé entre la conduite d'alimentation en gaz de préchambre (4) et la soupape à gaz de préchambre (3),
**caractérisé en ce qu'**au moins un obturateur (5), de préférence tous les obturateurs (5) affectés à une soupape à gaz de préchambre (3), présente un coefficient de débit suffisamment faible pour que la pression s'établissant de façon maximale entre les cycles de combustion dans le volume (6) entre la soupape à gaz de préchambre (3) et l'obturateur (5) n'atteigne pas la pression régnant dans la conduite d'alimentation en gaz de préchambre (4), mais que cette pression se trouve encore en phase ascendante lors de l'ouverture de la soupape à gaz de préchambre (3), de telle sorte qu'à ce moment du gaz s'écoule encore à partir de la conduite d'alimentation en gaz de préchambre (4) à travers l'obturateur (5) en direction du volume entre l'obturateur (5) et la soupape à gaz de préchambre (3).

2. Moteur à combustion interne (1) selon la revendication 1, **caractérisé en ce qu'**au moins deux obturateurs (5) présentent un coefficient de débit qui diffère l'un de l'autre.
